# FASCICULE DE BREVET EUROPEEN

(11) **EP 2 813 272 B1**
(45) Date de publication et mention de la délivrance du brevet: **29.07.2020**
(21) Numéro de dépôt: 14172281.9
(22) Date de dépôt: 13.06.2014
(51) Int. Cl.: B01D 33/073, B01D 33/41, B01D 33/46

(54) **Installation de tamisage d'un effluent chargé de matières en suspension**
Siebanlage für flüssigen Abfall, der mit Schwebstoffen belastet ist
Facility for screening an effluent loaded with suspended matter

(30) Priorité: 14.06.2013 FR 1355559
(43) Date de publication de la demande: 17.12.2014
(73) Titulaire: T.I.A. - Techniques Industrielles Appliquées, 84500 Bollène (FR)
(72) Inventeur: Beaulieu, Bernard, 07110 Chassiers (FR)
(74) Mandataire: Cabinet HERRBURGER

(56) Documents cités:
- EP-A1- 0 596 856
- DE-A1- 4 125 565
- FR-A1- 2 941 155
- GB-A- 672 700
- GB-A- 2 152 544
- US-A- 3 782 555
- US-A- 4 105 563

## Description

### Domaine de l'invention

La présente invention se rapporte à une installation de tamisage d'un effluent chargé de matières en suspension, ayant une succession de groupes de tamisage rotatifs à alimentation externe en contact avec l'effluent à filtrer et laissant traverser l'effluent en retenant les matières en suspension sur la surface extérieure du tamis pour les enlever par raclage. Chaque groupe de tamisage comprenant un tambour filtrant, formé d'un cylindre d'axe au moins sensiblement horizontal, entraîné en rotation et dont la surface périphérique est constituée par un tamis à seuil de coupure défini. Un bac recevant l'effluent à tamiser, a un déversoir appliqué extérieurement contre le tamis pour former une zone de contact entre le bain d'effluent du bac et la surface extérieure du tamis et un racloir est appliqué contre la surface extérieure du tamis, en aval du déversoir selon le sens de rotation du tambour pour racler les matières accumulées sur le tamis. Une auge est installée sous le tambour pour recevoir l'effluent filtré, ayant traversé le tamis, cette auge étant munie en partie basse d'une sortie. Les seuils de coupure des tamis des groupes de tamisage sont décroissants à partir du groupe en position la plus haute, au groupe en position la plus basse, les effluents passant successivement par gravité de la sortie d'un groupe à l'entrée du groupe situé en dessous de celui-ci.

### Etat de la technique

On connaît déjà une telle installation de tamisage d'un effluent chargé de matières solides, par exemple selon le document FR2 941 155

Il décrit une installation de tamisage dans laquelle chaque étage communique avec l'étage en aval par le déversoir du collecteur 160 recueillant l'effluent sortant du tambour associé à cette auge.

Le document US 3.782.555 décrit le filtrage par un tambour à filtre sous vide d'un liquide chargé de particules. Ce liquide arrive d'un réservoir 20 équipé d'un mélangeur 22 dans une auge 40 équipée d'un agitateur à pales 38 déversant le liquide dans le réservoir principal 14 dans lequel tourne le tambour à filtre 10.

### But de l'invention

La présente invention a pour but de développer la technique de tamisage appliquée par l'installation de tamisage d'un effluent selon l'état de la technique pour rendre ce tamisage encore plus efficace au niveau de chaque tambour.

### Exposé et avantages de l'invention

A cet effet l'invention a pour objet une installation de tamisage d'un effluent chargé de matières en suspension, ayant une succession de groupes de tamisage rotatifs à alimentation externe en contact avec l'effluent à filtrer et laissant traverser l'effluent en retenant les matières en suspension sur la surface extérieure du tamis pour les enlever par raclage,
Chaque groupe de tamisage comprenant
- Un tambour filtrant, formé d'un cylindre d'axe au moins sensiblement horizontal, entraîné en rotation et dont la surface périphérique est constituée par un tamis à seuil de coupure défini,
- Un bac recevant l'effluent à tamiser, ayant un déversoir appliqué extérieurement contre le tamis pour former une zone de contact entre le bain d'effluent du bac et la surface extérieure du tamis,
- Un racloir appliqué contre la surface extérieure du tamis, en aval du déversoir selon le sens de rotation (R) du tambour pour racler les matières (MS) accumulées sur le tamis,
- Une auge installée sur le tambour pour recevoir l'effluent filtré, ayant traversé le tamis, cette auge étant munie en partie basse d'une sortie,

Les seuils de coupure des tamis des groupes de tamisage étant décroissants à partir du groupe en position la plus haute, au groupe en position la plus basse, les effluents passant successivement par gravité de la sortie d'un groupe à l'entrée du groupe située en dessous de celui-ci.

Cette installation est caractérisée en ce que
- La sortie de l'auge d'un groupe est reliée par un tube à l'entrée de la partie basse du fond du bac du groupe en aval, et
- Le bac a un fond en forme de partie de cylindre horizontal de section circulaire logeant un agitateur à pales portées par un axe et tournant autour de l'axe horizontal (28) du cylindre formant le fond.

L'alimentation de chaque tambour filtrant avec un effluent homogénéisé, soit l'effluent initial, soit l'effluent déjà filtré par un tambour filtrant en amont, permet d'alimenter le tambour filtrant en un liquide chargé, avec une répartition relativement homogène des particules favorable à la séparation liquide-solide sur le tambour entre le déversoir et l'évacuation des matières solides ainsi retenues à la surface du tambour.

Suivant une autre caractéristique particulièrement avantageuse, le fond du bac est en forme de partie de cylindre horizontal de section circulaire et l'agitateur est un agitateur à pales tournant de l'axe horizontal du cylindre formant le fond.

Cette agitation lente permet d'obtenir un effluent particulièrement homogène remontant dans le bac pour arriver sur le déversoir.

De façon particulièrement avantageuse, le tambour de filtrage est équipé d'un dispositif de projection d'air comprimé dirigé sur la partie du tambour en aval du déversoir et en amont du racloir, sur les matières de l'effluent qui se déposent à la surface du tambour. Ce dispositif de projection d'air est de préférence une rampe ou une succession de buses dirigée suivant une génératrice du tambour.

L'air comprimé projeté sur les particules à la surface du tambour fait éclater le film ou la coquille de liquide qui reste à la surface des particules pour l'évacuer et sécher ainsi plus rapidement et plus efficacement les particules avant que celles-ci ne soient enlevées du tambour par le racloir.

De façon avantageuse, l'air comprimé projeté sur la nappe de matières à la surface du tambour est de préférence de l'air chaud améliorant d'autant l'efficacité de l'élimination de liquide.

Suivant une autre caractéristique, le bac est alimenté à partir de l'auge du tambour en amont par un tube muni d'un mélangeur statique. Ainsi, dès la sortie du filtrat du tambour amont, celui-ci est mélangé pour éviter les dépôts de matières solides dans la conduite et favorisant l'homogénéisation par la suite dans le bac du groupe suivant.

De façon particulièrement avantageuse, le tube alimentant le bac comporte une entrée pour introduire un agent chimique tel qu'un réactif chimique, des granulés absorbants ou des produits pulvérulents destinés à être mélangés au liquide dans le tube.

Suivant une autre caractéristique avantageuse, le tube comporte un mélangeur statique, notamment en forme de surface hélicoïdale pour favoriser le mélange de l'effluent et des additifs introduits dans le tube de sorte que l'effluent arrive déjà bien mélangé dans le fond du bac pour être repris par l'agitateur horizontal et être homogénéisé avec l'effluent du bac pour remonter dans celui-ci jusqu'au déversoir.

### Dessins

La présente invention sera décrite ci-après de manière plus détaillée à l'aide d'un mode de réalisation d'une installation de tamisage d'un effluent chargé de matières en suspension, représenté schématiquement dans les dessins annexés dans lesquels :
- la figure 1 est un schéma isolant le groupe courant de tamisage des groupes amont et aval de l'installation pour mettre en évidence sa structure,
- la figure 2 montre un exemple d'installation formée de groupes de tamisage courant tels que celui de la figure 1.

### Description de modes de réalisation de l'invention

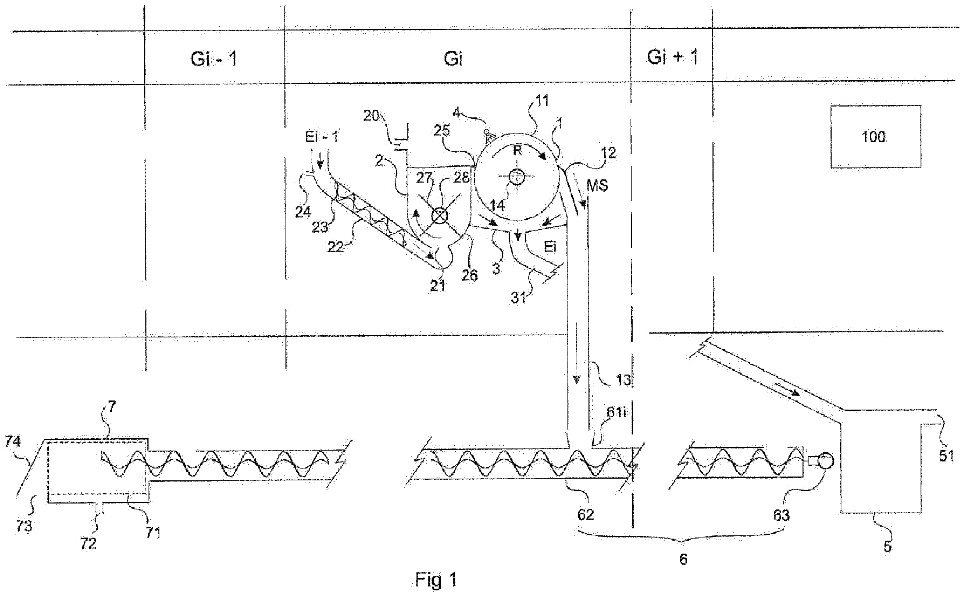

La figure 1 est le schéma de l'installation de tamisage d'effluents chargés de matières en suspension selon l'invention. Cette installation se compose d'une succession de groupes de tamisage Gi, reliés en série et dont seul le groupe courant Gi est représenté pour simplifier sa présentation et sa description avec sa liaison au groupe amont Gi-1 au groupe aval Gi+1 et à la sortie des matières séparées par le groupe courant Gi.

Le groupe Gi se compose d'un tambour filtrant 1 formé par un cylindre dont la surface est constituée par un tamis 11 ayant un certain seuil de coupure SC, défini en fonction de la position du groupe Gi dans la succession des groupes d'amont en aval. Le tambour 1 a un axe 14 sensiblement horizontal, entraîné en rotation par un moteur non représenté, commandé par un circuit de commande 100 gérant le fonctionnement de l'installation et la coordination des différents groupes de tamisage Gi les uns par rapport aux autres.

Le seuil de coupure SC est défini par l'entrefil du tamis de chaque tambour ; il diminue d'un groupe Gi au suivant pour atteindre en sortie de l'installation un seuil de rétention inférieur à 100 µm.

Le tambour filtrant 1 est alimenté en effluent à tamiser E par un bac 2 qui reçoit l'effluent E, par une entrée haute 20 située au-dessus du niveau de liquide dans le bac 2 dans le cas du groupe de tamisage GO le plus en amont. Le bac 2 comporte également une entrée-série 21 qui est l'entrée de chaque bac des groupes, à l'exception du premier groupe GO.

En partie haute du bac 2, le déversoir 25 appliqué extérieurement contre le tamis 11 du cylindre de tamisage 1 forme une zone de contact entre le bain d'effluent homogénéisé du bac 2 et la surface extérieure du tamis 11. Ce déversoir 25 est de préférence appliqué contre le tamis 11 suivant une génératrice de la forme cylindrique du tamis. Le sens de rotation R est schématisé pour le tambour 1. L'effluent se sépare de ses matières retenues par le tamis 11 et traverse celui-ci avec ses particules de granulométrie plus petite et cela directement au niveau du déversoir et puis tout au long du cheminement de la couche de matière humide jusqu'au racloir 12. Le liquide qui constitue l'effluent Ei pour le groupe Gi+1 suivant, ruisselle dans le tambour 1 et en ressort dans sa partie basse.

Le fond 26 du bac 2 a une forme de demi-cylindre circulaire logeant un agitateur 27 à pales portées par un axe 28 également entraîné par un moteur non représenté dont le fonctionnement est géré par la centrale de commande 100. L'agitateur 27 homogénéise l'effluent par une agitation lente.

L'entrée série 21 du bac 2 est située de préférence dans la partie basse du fond 26 reliée à l'extrémité d'un tube 22 équipé à l'intérieur d'un mélangeur statique 23. Ce tube 22, descendant, reçoit dans sa partie haute l'effluent Ei-1 provenant du groupe amont Gi-1. Ce tube 22 comporte également une entrée de produits 24 permettant l'ajout des additifs nécessaires au traitement de l'effluent. Cette entrée 24 est située en partie haute du tube 22 pour que le ou les produits ajoutés soient mélangés à l'effluent par l'agitateur statique 23 avant d'entrer dans le bac 2. L'effluent, éventuellement additionné de produits de traitement ou de réactifs, arrive au fond 26 du bac 2 pour être repris et homogénéisé par l'agitateur 27, évitant toute ségrégation dans le bac 2. Le liquide chargé est de préférence seulement agité dans la partie inférieure, au fond 26 du bac et présenté au niveau du déversoir un effluent homogène, favorable au dépôt sur le tamis 11 et à l'évacuation du liquide à travers celui-ci. Au-dessus du tambour filtrant 1 et le long de celui-ci, un dispositif de projection d'air comprimé 4 tel qu'une rampe de buses, est dirigé sur la surface du tamis 11 pour activer le passage de liquide à travers le tamis et accélérer ainsi le séchage des matières MS retenues sur le dessus du tamis 11 jusqu'au racloir 12. Les jets d'air cassent la pellicule de liquide entourant les particules et favorisent ainsi leur désication.

Pendant la circulation de la nappe de matière entre le déversoir 25 et le racloir 12, l'humidité de la matière traverse le tamis 11 et descend le long de la paroi intérieure du tamis pour sortir du tamis en partie basse. Sous le tambour filtrant 11, se trouve une auge 3 recueillant le liquide séparé par le tamis 11. L'auge 3 a une sortie 31 pour fournir l'effluent filtré au groupe Gi+1 en aval.

Le dernier groupe Gi dirige l'effluent filtré 31 dans une cuve de décantation 5 munie d'une sortie 51 en partie haute assurant la sortie du liquide décanté par débordement.

Pour favoriser le décrochage des matières MS, le tambour 1 est équipé en aval du déversoir 25, selon son sens de rotation R, d'un racloir 12 appliqué contre la surface extérieure du tamis 11, avantageusement suivant une génératrice de la forme cylindrique du tamis pour bien racler les matières MS accumulées sur le tamis 11.

Les matières raclées passent dans une conduite 13 puis dans une conduite d'évacuation 6 dans la partie basse de l'installation. Cette conduite d'évacuation 6 est munie d'une entrée 61 associée à chaque groupe Gi. La conduite est équipée d'une vis d'Archimède 62 pour entraîner les produits. Cette vis est mise en rotation par un moteur 63 commandé par la centrale de commande 100.

La vis d'Archimède 62 pousse les produits MS dans une boîte de compactage 7 munie d'un cylindre filtrant 71. Les matières raclées MS mais non encore complètement sèches, s'égouttent dans le cylindre filtrant 71 de la boîte de compactage 7. Les jus sont évacués par la sortie 72. La matière compactée dans le cylindre 71 est évacuée par la sortie 73 munie d'un volet 74 qui permet de compacter la matière poussée dans le cylindre filtrant par la vis d'Archimède 72 jusqu'à atteindre une certaine charge. A ce moment, le volet 74 est ouvert pour évacuer la matière. L'ouverture du volet 74 peut également être réglée pour limiter le passage et créer une perte de charge de façon à freiner et retenir au moins partiellement les produits dans le cylindre filtrant 71 tout en permettant leur sortie en continu.

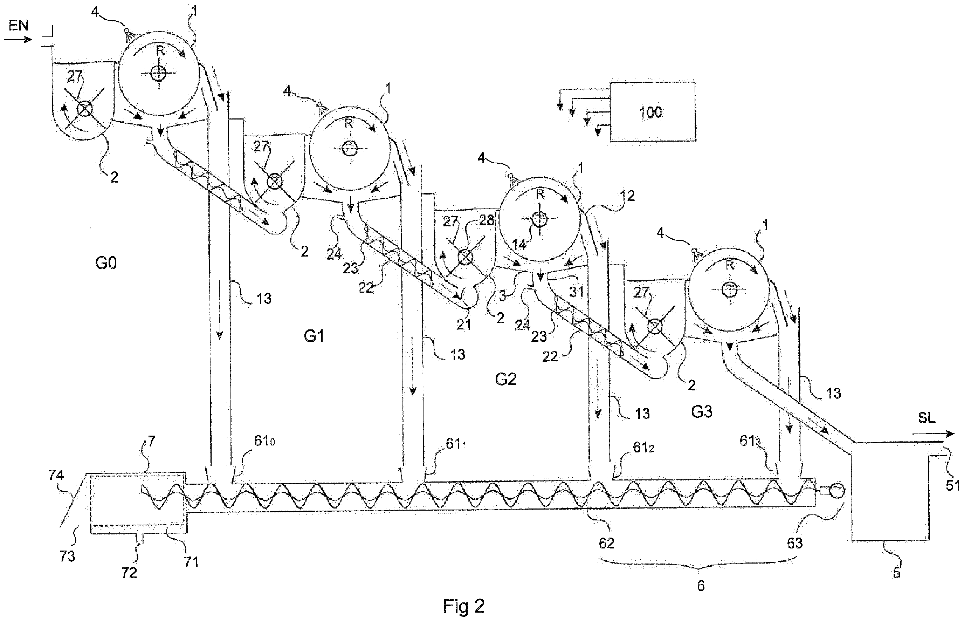

La figure 2 montre un exemple d'installation 200 formée par la combinaison en série de quatre groupes G0-G3 tels que celui Gi décrit ci-dessus. L'installation fonctionnant par gravité, les groupes GO-G3 sont à des niveaux décroissants.

Pour ne pas surcharger la figure 2 et éviter les répétitions, les composants des groupes GO-G3 ne sont pas tous référencés et seuls le sont ceux du groupe G2 pris à titre d'exemple.

Le groupe d'entrée GO a un bac 2 avec une entrée haute 20 sans entrée basse pour l'effluent E. La sortie 31 de son auge 3 est reliée au tube 22 alimentant le bac 2 du groupe G1 et ainsi de suite d'un groupe à l'autre.

Le dernier groupe G3 débouche par sa sortie d'auge 31 dans le bac de décantation.

En résumé, l'effluent alimente l'installation 200 de façon régulée en arrivant dans le bac 2 du premier groupe GO qui homogénéise l'effluent avec son agitateur 27 pour faire passer l'effluent par l'extérieur par le déversoir 25 sur le tambour filtrant 1 qui retient les matières dont la granulométrie dépasse l'entrefil (ou seuil de coupure SC). La nappe de matières restant sur le tamis passe sous la rampe de projection d'air comprimé 4 qui est de préférence de l'air chaud. Cet air chaud fait éclater la coquille d'eau entourant chaque particule et favorise ainsi le déséchage de la matière qui, raclée par le racloir 12, arrive dans une trémie et dans la conduite 13 pour être évacuée par la conduite 6.

La fraction d'effluent Ex dont la granulométrie est inférieure à l'entrefil du tamis 11 de ce premier groupe G0 s'écoule dans l'auge 3 pour alimenter le tube 22 du groupe G1 suivant. Au niveau de la partie supérieure du tube 22, on ajoute par l'entrée de produits 24 un réactif chimique ou un granulé absorbant ou un produit pulvérulent qui sera mélangé à l'effluent sortant du premier groupe GO. Le mélange sera favorisé par le mélangeur statique, par exemple une vis hélicoïdale 23 équipant le tube 22.

Dans le groupe G1, l'effluent est agité pour être homogénéisé et alimenter le tamis du tambour qui retient des particules de granulométrie plus petite et laisse l'effluent avec des matières dont la granulométrie est inférieure à celle du seuil de coupure de ce second tamis et ainsi de suite.

Cette opération de filtrage-tamisage est renouvelée dans l'installation quatre fois entre l'entrée dans le premier groupe GO et la sortie du quatrième groupe G3. Le but de ce filtrage est d'atteindre un seuil de rétention correspondant à la réglementation qui est par exemple un seuil fixé à 100 µm.

Par ailleurs, la matière solide de chaque groupe G0-G3 arrive dans la conduite d'évacuation 6 pour être traitée et compactée puis être évacuée.

### NOMENCLATURE

- 1: Tambour filtrant
- 11: Tamis
- 12: Racloir
- 13: Conduite de la matière raclée
- 14: Axe du tambour

- 2: Bac d'effluent
- 20: Entrée haute
- 21: Entrée-série
- 22: Tube
- 23: Mélangeur statique
- 24: Entrée produits
- 25: Déversoir
- 26: Fond
- 27: Agitateur
- 28: Axe de l'agitateur

- 3: Auge
- 31: Sortie auge

- 4: Dispositif de projection d'air comprimé

- 5: Cuve de décantation
- 51: Sortie par débordement

- 6: Conduite d'évacuation
- 61: Vis d'Archimède
- 62: Moteur

- 7: Boîte de compactage
- 71: Cylindre filtrant
- 72: Sortie des jus
- 73: Sortie produits
- 74: Volet
- 100: Centrale de commande
- 200: Installation composée d'une série de groupes Gi

- E: Effluent
- Ex: Effluent filtré
- Gi (G0-G3): Groupe de tamisage
- MS: Matière solide
- SC: Seuil de coupure

## Revendications

1. Installation de tamisage d'un effluent chargé de matières en suspension, ayant une succession de groupes de tamisage (Gi) rotatifs à alimentation externe en contact avec l'effluent à filtrer et laissant traverser l'effluent en retenant les matières en suspension (MS) sur la surface extérieure du tamis pour les enlever par raclage,
chaque groupe de tamisage (Gi) comprenant
- un tambour filtrant (1), formé d'un cylindre d'axe (14) au moins sensiblement horizontal, entrainé en rotation (R) et dont la surface périphérique est constituée par un tamis (11) à seuil de coupure défini (SC),
- un bac (2) recevant l'effluent (E) à tamiser, ayant un déversoir (25) appliqué extérieurement contre le tamis (11) pour former une zone de contact entre le bain d'effluent du bac (2) et la surface extérieure du tamis (11),
- un racloir (12) appliqué contre la surface extérieure du tamis (11), en aval du déversoir (25) selon le sens de rotation (R) du tambour (1) pour racler les matières (MS) accumulées sur le tamis (11),
- une auge (3) installée sous le tambour (1) pour recevoir l'effluent filtré (Ex), ayant traversé le tamis (11), cette auge étant munie en partie basse d'une sortie (31),
les seuils de coupure (SC) des tamis des groupes de tamisage (Gi) étant décroissants à partir du groupe (G1) en position la plus haute, au groupe (Gn) en position la plus basse, les effluents passant successivement par gravité de la sortie (31) d'un groupe à l'entrée (21) du groupe situé en dessous de celui-ci,
installation **caractérisée en ce que**
- la sortie (31) de l'auge (3) du groupe (Gi) est reliée par un tube (22) à l'entrée (21) de la partie basse du fond (26) du bac (2) du groupe (Gi+1) en aval,
- le bac (2) a un fond (26) en forme de partie de cylindre horizontal de section circulaire logeant un agitateur (27) à pales portées par un axe et tournant autour de l'axe horizontal (28) du cylindre formant le fond (26).

2. Installation selon la revendication 1,
**caractérisée en ce que**
l'agitateur (27) est un agitateur à pales à rotation lente.

3. Installation selon la revendication 1,
**caractérisée en ce qu'**
elle comporte un dispositif de projection d'air comprimé (4) dirigé sur la partie du tambour (1) en aval du déversoir (25) et en amont du racloir (12).

4. Installation selon la revendication 3,
**caractérisée en ce que**
le dispositif de projection d'air comprimé (4) est une rampe ou une succession de buses dirigées suivant une génératrice du tambour (1).

5. Installation selon la revendication 3,
**caractérisée en ce que**
le dispositif de projection d'air comprimé (4) projette de l'air chaud.

6. Installation selon la revendication 1,
**caractérisée en ce que**
le bac (2) est alimenté à partir de l'auge (3) du tambour (1) en amont par un tube (22) muni d'un mélangeur statique (23).

7. Installation selon la revendication 6,
**caractérisée en ce que**
le tube (22) alimentant le bac (2) comporte une entrée (24) pour l'introduction d'un réactif chimique, de granulés absorbants ou de produits pulvérulents pour être mélangés au liquide.

8. Installation selon la revendication 7,
**caractérisée en ce que**
le tube (22) est équipé d'un mélangeur statique (23), notamment un mélangeur statique (23) en forme de surface hélicoïdale.

## Patentansprüche

1. Siebanlage für flüssigen Abfall, der mit Schwebstoffen belastet ist, aufweisend eine Abfolge von sich drehenden, extern gespeisten Siebgruppen (Gi), die mit dem zu filternden flüssigen Abfall in Kontakt steht und den flüssigen Abfall hindurchlässt, während sie die Schwebstoffe (MS) auf der Außenfläche des Siebs zurückhält, um sie durch Abstreichen zu entfernen,
wobei jede Siebgruppe (Gi) Folgendes umfasst
- eine Filtertrommel (1), die aus einem Zylinder mit einer zumindest im Wesentlichen horizontalen Achse (14) gebildet ist, der in Drehung (R) versetzt wird und dessen Umfangsfläche aus einem Sieb (11) mit definierter Ausschlussgrenze (SC) besteht,
- einen Behälter (2), der den zu siebenden flüssigen Abfall (E) aufnimmt und einen Überlauf (25) aufweist, der außen gegen das Sieb (11) angebracht ist, um eine Kontaktzone zwischen dem Bad aus flüssigem Abfall in dem Behälter (2) und der Außenfläche des Siebs (11) zu bilden,
- einen Abstreicher (12), der gegen die Außenfläche des Siebs (11) nachgelagert zum Überlauf (25) in der Drehrichtung (R) der Trommel (1) angebracht ist, um die sich auf dem Sieb (11) sammelnden Stoffe (MS) abzustreichen,
- eine unter der Trommel (1) montierte Rinne (3) zum Aufnehmen des gefilterten flüssigen Abfalls (Ex), der das Sieb (11) durchlaufen hat, wobei die Rinne im unteren Teil mit einem Auslass (31) versehen ist,
wobei die Ausschlussgrenzen (SC) der Siebe der Siebgruppen (Gi) von der Gruppe (G1) in der höchsten Position bis zur Gruppe (Gn) in der untersten Position abnehmen, wobei der flüssige Abfall nacheinander durch Schwerkraft vom Auslass (31) einer Gruppe zum Einlass (21) der darunter liegenden Gruppe fließt,
wobei die Anlage **dadurch gekennzeichnet ist, dass**
- der Auslass (31) der Rinne (3) der Gruppe (Gi) durch ein Rohr (22) mit dem Einlass (21) des unteren Teils des Bodens (26) des Behälters (2) der nachgelagerten Gruppe (Gi+1) verbunden ist,
- der Behälter (2) einen Boden (26) in Form eines horizontalen Zylinderabschnitts mit rundem Querschnitt aufweist, in dem ein Flügelrührer (27) untergebracht ist, das durch eine Achse gelagert ist und sich um die horizontale Achse (28) des den Boden (26) bildenden Zylinders dreht.

2. Anlage nach Anspruch 1,
**dadurch gekennzeichnet, dass**
es sich bei dem Rührer (27) um einen sich langsam drehenden Flügelrührer handelt.

3. Anlage nach Anspruch 1,
**dadurch gekennzeichnet, dass**
sie eine Druckluftausstoßvorrichtung (4) umfasst, die auf den Trommelabschnitt (1) nachgelagert zum Überlauf (25) und vorgelagert zum Abstreicher (12) gerichtet ist.

4. Anlage nach Anspruch 3,
**dadurch gekennzeichnet, dass**
es sich bei der Druckluftausstoßvorrichtung (4) um eine Leiste oder eine Abfolge von Düsen handelt, die nach einer Erzeugenden der Trommel (1) ausgerichtet ist.

5. Anlage nach Anspruch 3,
**dadurch gekennzeichnet, dass**
die Druckluftausstoßvorrichtung (4) Warmluft ausstößt.

6. Anlage nach Anspruch 1,
**dadurch gekennzeichnet, dass**
der Behälter (2) aus der Rinne (3) der vorgelagerten Trommel (1) durch ein mit einem statischen Mischen (23) versehenen Rohr (22) gespeist wird.

7. Anlage nach Anspruch 6,
**dadurch gekennzeichnet, dass**
das Rohr (22), welches der Behälter (2) speist, einen Einlass (24) zum Einleiten eines chemischen Reagens, eines Absorptionsgranulats oder von pulverförmigen Produkten umfasst, um mit Flüssigkeit gemischt zu werden.

8. Anlage nach Anspruch 7,
**dadurch gekennzeichnet, dass**
das Rohr (22) mit einem statischen Mischer (23), insbesondere einem statischen Mischer (23) in Form einer Schraubenfläche, ausgestattet ist.

## Claims

1. Installation for screening an effluent which is charged with materials in suspension, having a succession of rotating screening groups (Gi) with external supply which are in contact with the effluent to be filtered and which allow the effluent to pass through with the materials in suspension (MS) being retained on the external surface of the screen in order to remove them by means of scraping,
each screening group (Gi) comprising
- a filtering drum (1) which is formed by a cylinder having a substantially horizontal axis (14) and which is rotatably driven (R) and whose peripheral surface is constituted by a screen (11) having a defined cutoff threshold (SC),
- a tank (2) which receives the effluent (E) to be screened, having a spillway (25) which is applied externally against the screen (11) in order to form a contact zone between the effluent bath of the tank (2) and the outer surface of the screen (11),
- a scraper (12) which is pressed against the outer surface of the screen (11), downstream of the spillway (25) in the rotation direction (R) of the drum (1) in order to scrape the materials (MS) accumulated on the screen (11),
- a trough (3) which is installed below the drum (1) in order to receive the filtered effluent (Ex) which has passed through the screen (11), this trough being provided at the lower portion with an outlet (31),
the cutoff thresholds (SC) of the screens of the screening groups (Gi) decreasing from the group (G1) at the highest position to the group (Gn) at the lowest position, the effluents passing successively by gravitational force from the outlet (31) of one group to the inlet (21) of the group located below it,
which installation is **characterised in that**
- the outlet (31) of the trough (3) of the group (Gi) is connected via a tube (22) to the inlet (21) of the lower portion of the base (26) of the tank (2) of the group (Gi+1) downstream,
- the tank (2) has a base (26) in the form of a horizontal cylinder portion having a circular cross-section which accommodates an agitator (27) having blades which are carried by an axle and which rotate about the horizontal axis (28) of the cylinder which forms the base (26).

2. Installation according to claim 1,
**characterised in that**
the agitator (27) is an agitator with slowly rotating blades.

3. Installation according to claim 1,
**characterised in that**
it comprises a compressed air projection device (4) which is directed onto the portion of the drum (1) downstream of the spillway (25) and upstream of the scraper (12).

4. Installation according to claim 3,
**characterised in that**
the compressed air projection device (4) is a ramp or a succession of nozzles which are directed in accordance with a generatrix of the drum (1).

5. Installation according to claim 3,
**characterised in that**
the compressed air projection device (4) projects hot air.

6. Installation according to claim 1,
**characterised in that**
the tank (2) is supplied from the trough (3) of the drum (1) upstream via a tube (22) which is provided with a static mixer (23).

7. Installation according to claim 6,
**characterised in that**
the tube (22) which supplies the tank (2) comprises an inlet (24) for introducing a chemical reagent, absorbent granules or powdered products in order to be mixed with the liquid.

8. Installation according to claim 7,
**characterised in that**
the tube (22) is provided with a static mixer (23), in particular a static mixer (23) in the form of a helical surface.
